# EUROPEAN PATENT SPECIFICATION

(11) **EP 1 604 842 B1**
(45) Date of publication and mention of the grant of the patent: **03.04.2013**
(21) Application number: 04013710.1
(22) Date of filing: 11.06.2004
(51) Int. Cl.: B60C 23/12

(54) **Automatic tire pressurizing device**
Automatische Druckbeaufschlagungseinrichtung für Fahrzeugreifen
Dispositif de pressuration automatique pour des pneumatiques

(43) Date of publication of application: 14.12.2005
(73) Proprietor: Volvo Car Corporation, 405 31 Göteborg (SE)
(72) Inventor: Wessman, Björn, 423 41 Torslanda (SE)
(74) Representative: Mossmark, Anders Lennart

(56) References cited:
- US-A- 1 566 667
- US-A- 2 095 489
- US-A- 5 865 917

## Description

### TECHNICAL FIELD

The invention refers to a pneumatic tire pressurizing device for automatically pressurizing a load-bearing tire during rotation thereof over a surface. The pressurizing device comprises a housing encompassing an inner space. The tire comprises a tire volume comprising compressed air having predetermined tire pressure.

### BACKGROUND ART

Vehicles are equipped with wheels that rotate over a surface when the vehicle is moved. Most vehicles use a wheel comprising a tire fitted onto a rim which is mounted on a wheel disc. In the field of vehicles it is known that the tire pressure of the wheel is of the utmost importance for the performance of the vehicle. Therefore, all vehicle users are informed via manuals what predetermined tire pressure is suitable for what operating condition, i.e. load, speed, etc. One problem with the wheel arrangements of today is that air slowly leaks from the tire. Even though the leakage is small it forces the user of the vehicle to monitor the tire pressure on occasion and to refill when the tire pressure is below the predetermined value. If the user neglects to always keep the tire pressure as close to the predetermined value as possible, the performance of the vehicle may be worsened. If the tire pressure gets too low, the vehicle may perform so bad at high speeds that the vehicle becomes dangerous for the user and for fellow road users.

According to the preamble of claim 1, US 1 566 667 relates to an automatic air pump for motor vehicle tires aiming to provide a device adapted to automatically maintain adequate pressure in the tires, whereby rim cutting and problems as a result of under-inflation will be avoided. A problem with this device is that it is sensitive to mechanical malfunction as it comprises numerous valves and it lacks a failsafe against deterioration of the spring controlling the degree of pressurization.

There is thus a need for an automatic pressurizing device that ensures that the tire pressure always is kept close to the predetermined level.

### DISCLOSURE OF INVENTION

The object of the invention is to remedy the above deficiencies and to find a pneumatic tire pressurizing device for automatically pressurizing a load-bearing tire during rotation thereof over a surface. The surface may be a tarmacadamed road, a gravel road, an asphalt road or any other suitable surface material allowing a vehicle to pass. The tire comprises a tire volume comprising compressed air having predetermined tire pressure. The predetermined tire pressure depends on numerous factors. For example, the construction of the tire, the material in the tire, the vehicle load, and the rotational speed, etc. The knowledge of suitable predetermined tire pressures for different situations are well known in prior art. The predetermined tire pressure preferably refers to the tire pressure when the vehicle is standing still.

The invention is characterised in that the pressurizing device comprises a housing encompassing an inner space. The housing comprises a movable device connected to the housing and delimiting the inner space. The movable device is preferably in the form of a membrane, why the movable device hereinafter is called the membrane. The housing also comprises a compression unit connected to the membrane. The compression unit comprises a compression chamber. The pressurizing device is connectable to a wheel comprising the tire such that, when connected to the wheel;
- a pressure chamber is in fluid communication with a pressure chamber conduit arranged to allow the air in the tire volume to flow into contact with the membrane such that the membrane is subject to the tire pressure,
- said membrane being arranged, compared to a reference position, to have a negative position when the tire pressure is lower than the predetermined tire pressure,
- said compression unit being arranged to compress air in the compression chamber when the membrane, starting from the negative position, is affected by a sudden increase of the tire pressure due to deformation of the tire when passing an irregularity in the surface, wherein the compression unit is arranged to feed the compressed air in the compression chamber to the tire volume via the pressure chamber.

The advantage of the invention lies in that the pressurizing device automatically refills the tire and compensates for any pressure loss due to minor and normal leakage. Testing has shown that it is normal for a car tire to loose 15% of a predetermined tire pressure of 2 bar during 1 year when driving 2000 km. The irregularities in the surface may cause pressure increase peaks of about 20% of the tyre pressure. The pressure peaks causes enough movement of the membrane to cause compression of air in the compression unit.

According to one embodiment the inner space comprises an outer chamber comprising the compression chamber and a balancing chamber. The balancing chamber is in fluid communication with ambient air via a balancing chamber conduit, enabling a neutral air pressure in the balancing chamber.

According to one embodiment the membrane is arranged to be balanced against the tire pressure in the pressure chamber by a first resilient means such that the membrane, compared to the reference position, has the negative position when the tire pressure is lower than the predetermined tire pressure and a positive position when the tire pressure is above the predetermined tire pressure. Both the negative and the positive positions are relative positions that changes with the tire pressure.

The compression unit is advantageously arranged such that when the membrane is in the negative position the compression chamber is in fluid communication with ambient air via an air intake conduit and such that when the membrane is in a positive position the compression chamber is hindered from fluid communication with the ambient air. Since the compression chamber in the positive position is hindered from fluid communication with ambient air, the air in the compression chamber may be compressed by the compression chamber diminishing its volume.

According to one embodiment the compression unit comprises a piston and the compression chamber. The piston is attached to the membrane and extends from the membrane into the compression chamber. The compression chamber has an inner circumferential geometry corresponding to the outer circumferential feature of the piston. The outer circumferential dimension of the piston may advantageously be smaller than the inner circumferential dimension of the compression chamber, such that the piston may slide with an acceptable degree of friction in the compression chamber. The gap width between the piston and compression chamber cannot be so large that the air in the compression chamber may leak during the compression phase, because this would diminishing the compression of the air in the compression chamber.

According to one embodiment the piston is cylindrical with two opposing first and second end surfaces and a therebetween extending envelope surface. The piston comprises a first conduit extending from a first opening in the first end surface to a second opening, and a second conduit extending from the second opening to a third opening in the second end surface. The piston may in another embodiment have another cross-section than a circular, for example, oval, rectangular, or triangular. The cross-section of the compression chamber will of course vary with the cross-section of the piston.

According to one embodiment the membrane has a membrane opening essentially aligned with the first opening. The first and second conduits together with the membrane opening form an open passage between the compression chamber and the pressure chamber.

According to one embodiment the second opening is narrower than the first conduit and the piston comprises a first valve placed in the first conduit against the second opening in a first position.

According to one embodiment the first valve is balanced by a second resilient means in the form of a spring extending in the direction of the first conduit.

The piston is arranged to be displaced in a sliding direction from the negative position to the positive position when the tire pressure increases from a value below the predetermined tire pressure to a value equal to or above the predetermined tire pressure. The sliding direction is defined by the direction in which the piston is guided by the compression chamber. When the tire pressure is equal to or above the predetermined tire pressure, the air intake conduit is closed by the envelope surface. The tire pressure may be higher than the predetermined tire pressure due to several reasons. One reason is that the user has filled too much air into the tire. Another reason is that the surface on which tire is rolled has irregularities that deform the tire causing a sudden increase of the tire pressure. When the piston is displaced in the sliding direction from the negative position to the positive position, the air in the compression chamber is compressed by the piston movement.

According to one embodiment the second resilient means is arranged to release the first valve when the compressed air exercises a predetermined air pressure on the first valve.

According to one embodiment the compression unit is arranged to feed the compressed air in the compression chamber to the tire volume via the pressure chamber when the first valve is released.

The second surface advantageously has a lesser area than the membrane and the pressure peaks causing the membrane to move thus gives enough energy to the piston to compress the air in the compression chamber into a pressure exceeding the pressure in the pressure chamber. The theory behind a larger object being subject to one pressure pressing on a smaller object causing a higher pressure due to the difference in area is well known in the theory of fluid dynamics and the science of hydraulics.

Furthermore, the pressure peak returns to a lower value after having pushed the membrane in the positive direction. This lower value allows also air of lesser pressure increases of the compressed air to be fed to the tyre volume.

According to one embodiment the pressurizing device comprises a second air valve intended to be used for inflating and deflating the tire, wherein the second air valve is connected to the pressure chamber via a second air valve conduit.

The pressurizing device may be mounted on the rim, or on the wheel disc or on an air valve already existing in the wheel. Different embodiments will be explained further in connection to a number of figures.

The pressurizing device may be made from any durable light material, for example, plastic, light metal, ceramics or a combination of materials.

### BRIEF DESCRIPTION OF DRAWINGS

The invention will below be explained in connection to a number of figures, where;
Fig. 1 schematically teaches a cross-section of a tire pressurizing device according to a first embodiment of the invention mounted on a wheel;
Fig. 2 schematically teaches a cross-section of a tire pressurizing device according to a second embodiment of the invention mounted on a wheel, where the tire pressurizing device is in a negative position;
Fig. 3 schematically teaches a cross-section of a tire pressure according to fig. 2, but where the tire pressurizing device is in a positive position;
Fig. 4 schematically teaches a magnified cross-section of a compression unit according to figures 1-3, and where;
Fig. 5 schematically teaches a magnified cross-section of a compression unit according to another embodiment of the invention, and where;
Fig. 6 schematically teaches a cross-section of a tire pressurizing device according to a third embodiment of the invention mounted on a wheel, where the tire pressurizing device is in a negative position.

### EMBODIMENTS OF THE INVENTION

The common features in the enclosed figures are denoted with the same reference numbers.

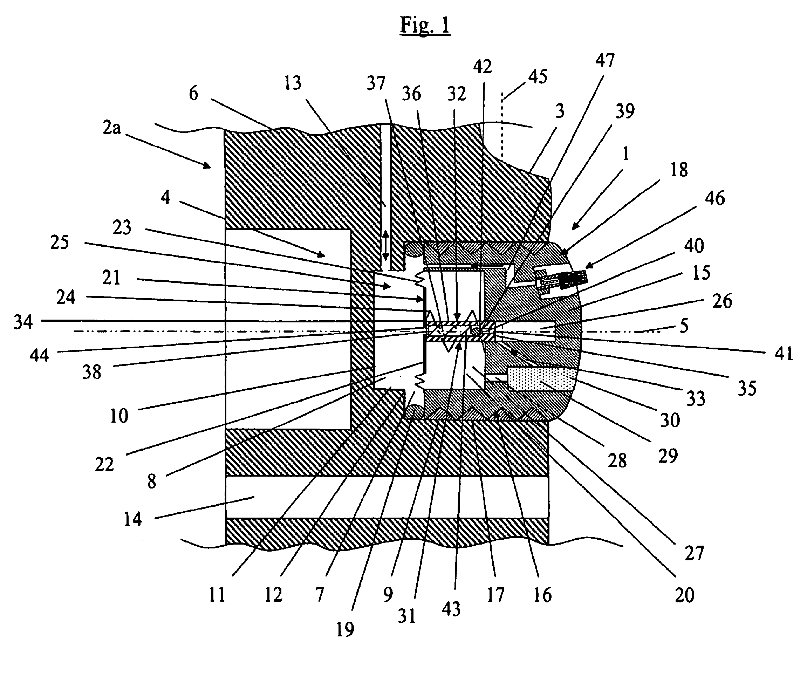

Fig. 1 schematically teaches a cross-section of a tire pressurizing device 1 according to a first embodiment of the invention mounted on a wheel 2. The wheel 2 comprises a load bearing tire (not shown) mounted on a rim (not shown) comprising a tire volume comprising compressed air with a predetermined tire pressure. The wheel also comprises a wheel disc 2a (or nave) joined to the rim. The tire pressurizing device 1 is arranged for automatically pressurizing the load-bearing tire during rotation thereof over a surface.

Figure 1 shows only a part of the wheel disc 2a comprising a central part 4 with a central axis. The wheel disc 2a comprises a number of spokes 6 extending in the radial direction from the central part 4 to the rim. The central part is arranged with a cylindrical opening 7 and a cylindrical cavity 8 with a lesser diameter than the cylindrical opening 7 and arranged in fluid communication with the cylindrical opening 7. In figure 1, the cylindrical cavity 8 is arranged coaxially with the cylindrical opening 7. The cylindrical opening 7 is delimited by a circumferential first wall 9 being threaded. The cylindrical cavity 8 is delimited by a circular bottom wall 10 and a circumferential second wall 11 extending from the bottom portion to the cylindrical opening 7. The cylindrical cavity 8 transitions into the cylindrical opening 7 by the second circumferential wall being transitioned into a circumferential ledge 12 extending in a radial direction, i.e. essentially perpendicular to the direction of extension of the second wall. The ledge extends in the radial direction from the second wall to the first wall.

In figure1, a channel 13 is arranged in the wheel disc 2a in the spoke 6 connecting the inner volume of the tire with the cylindrical cavity 8. The channel 13 opens out into the inner volume and the cylindrical cavity 8 and penetrates thus also the rim. Figure 1 also shows one hole 14 at a distance from the centre axis intended to receive a bolt for attachment of the wheel 2 to an automobile.

In figure 1, the tire pressurizing device 1 comprises a housing 15 having an outer circumferential portion 16 being equipped with threads 17 and a top portion 18. The pressuring device is screwed into the cylindrical opening 7 in the centre of the wheel disc 2a. One benefit of this embodiment is that the pressurizing device 1 is arranged symmetrically in view of the rotational axis of the wheel 2. Another benefit is that the pressurizing device 1 is placed at a maximum distance from the ground surface, which diminishes the risk of dirt from the ground surface and water from puddles soiling the pressurizing device 1. The pressuring device need not be threaded, but may in another embodiment be mounted to the wheel 2 by any other suitable attachment means, for example, by use of mechanical joint or welding, or the like.

Figure 1 shows that the pressurizing device 1 is screwed into the opening such that the outer portion of the pressurizing device 1 is sealed in an air tight manner against the ledge by use of sealing means 19 in the form of an O-ring.

Figure 1 shows that the tire pressurizing device 1 comprises the housing 15 partly encompassing an inner space in the form of an outer chamber 20 closed and delimited by a movable device in the form of a membrane 21 connected to the housing 15. The membrane 21 comprises a stiff section 22 and a resilient section 23. The stiff section 22 forms a middle portion of the membrane 21 and the resilient section 23 forms an outer portion enclosing the middle portion. The resilient section 23 is attached to the housing 15 such that the stiff section 22 may be displaced in a sliding direction coinciding with the extension of the first conduit 37 and the second conduit 40. The membrane 21 is balanced by a first resilient means 24 attached to the stiff section 22. In figure 1 the resilient means is in the form of a spring, but may in another embodiment comprise another suitable resilient means.

The cylindrical cavity 8 and that part of the cylindrical opening 7 being delimited by the pressurizing device 1 when the pressurizing device 1 is screwed against the sealing means 19, together form a pressure chamber 25. The pressure chamber 25 is in direct fluid communication with the compressed air in the tire volume via a pressure chamber conduit in the form of the channel 13 in the spoke 6, when the pressurizing device 1 is connected to the wheel 2. The pressure chamber 25 and the channel 13 allows the air in the tire volume to flow into contact with the membrane 21 such that the membrane 21 is subject to the tire pressure. The first resilient means 24 balances the membrane 21 against a predetermined tire pressure.

The outer chamber 20 comprises a compression chamber 26 and a balancing chamber 27. The balancing chamber 27 is in fluid communication with ambient air via a balancing chamber conduit 28 opening out into a filter chamber 29 comprising a filter 30 for filter 30ing the ambient air. Here, ambient air refers to the air surrounding the wheel 2. The fluid communication with ambient air enables a neutral air pressure in the balancing chamber 27.

In figure 1, the pressurizing device 1 comprises a compression unit 31 comprising a piston 32 and the compression chamber 26. The compression chamber 26 is in fluid communication with the ambient air via an air intake conduit 33. In figure 1, the air intake conduit 33 opens out into the filter chamber 29.

In figure 1, the piston 32 is attached to the membrane 21 and extends from the membrane 21 through the balancing chamber 27 into the compression chamber 26. The piston 32 is slidably housed in the compression chamber 26 for movement in the sliding direction. Here, sliding direction refers to the direction of movement of the piston 32 in the compression chamber 26 acting as a cylinder for the piston 32.

In figure 1, the piston 32 is cylindrical with two opposing first and second end surfaces 34, 35 and a therebetween extending envelope surface 36. The piston 32 comprises a first conduit 37 extending from a first opening 38 in the first end surface 34 to a second opening 39, and a second conduit 40 extending from the second opening 39 to a third opening 41 in the second end surface 35. The second opening 39 is narrower than the first conduit 37. The piston 32 comprises a first valve 42 placed in the first conduit 37 against the second opening 39 in a first position. The first valve 42 is balanced by a second resilient means 43 in the form of a spring extending in the direction of the first conduit 37. The membrane 21 has a membrane opening 44 essentially aligned with the first opening 38. The membrane opening 44 and the first opening 38 together form a passage for fluid communication. The piston 32 is attached to the membrane 21 in an air tight manner such that air may be passed from the outer chamber 20 to the pressure chamber 25, via the conduits in the piston 32 and the membrane opening 44 only. In another embodiment the membrane 21 and the piston 32 may be formed in one air tight piece.

The membrane 21 is arranged to be balanced against the tire pressure in the pressure chamber 25 by the first resilient means 24 such that the membrane 21 compared to a reference position 45 has a negative position when the tire pressure is lower than the predetermined tire pressure and a positive position when the tire pressure is above the predetermined tire pressure. Figure 1 shows the membrane 21 in the negative position and that the compression chamber 26 is in fluid communication with the ambient air via the air intake conduit 33 when the membrane 21 is in the negative position.

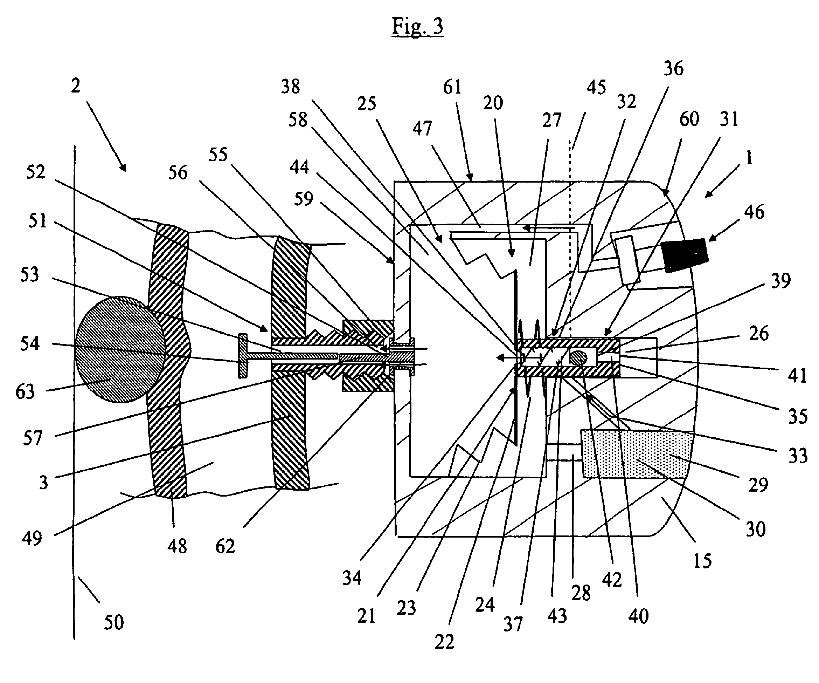

The compression unit 31 is arranged to compress the air in the compression chamber 26 when the membrane 21, starting from the negative position, is pushed in the direction of the positive position due to an increase of the tire pressure, and thus the air pressure in the pressure chamber 25, due to deformation of the tire when passing an irregularity in the ground surface. Referring to figure 1, the piston 32 would be displaced in the sliding direction from the negative position to a positive position (see figure 3) where the air intake conduit 33 would be closed by the envelope surface 36 and the air in the compression chamber 26 would be compressed by the piston 32 movement. When the piston 32 has compressed the air in the compression chamber 26, the compression unit 31 is arranged to feed the compressed air in the compression chamber 26 to the tire volume via the pressure chamber 25. The second resilient means 43 is arranged to release the first valve 42 when the compressed air exercises a certain pressure on the valve. This will below be explained further in connection to figure 3.

In figure 1, the pressurizing device 1 comprises a second air valve 46 intended to be used for inflating and deflating the tire. The second air valve 46 is placed in the top portion 18 and is connected to the pressure chamber 25 via a second air valve conduit 47.

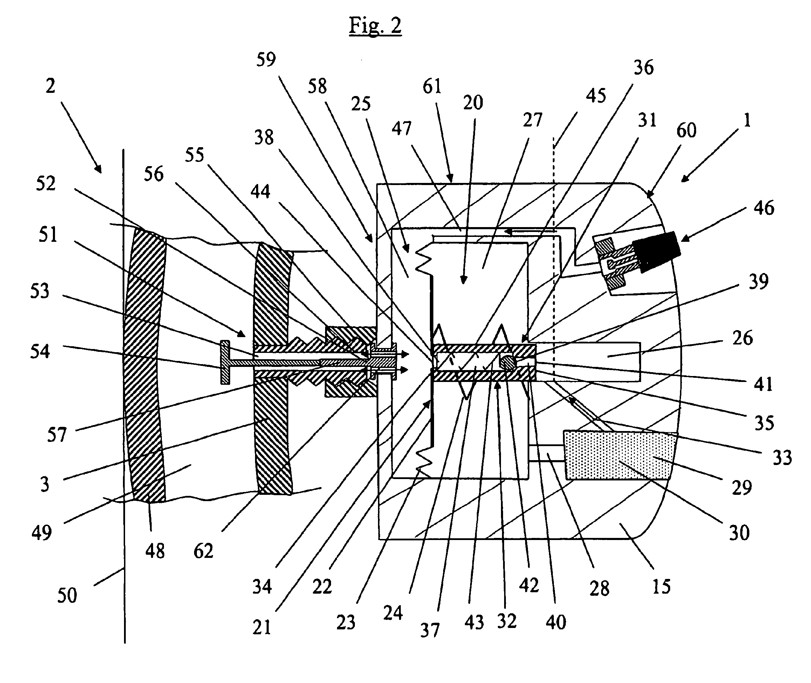

Fig. 2 schematically teaches a cross-section of a tire pressurizing device 1 according to a second embodiment of the invention mounted on a wheel 2.
Figure 2 shows a part of the rim 3 and the tire 48 and the therebetween enclosed tire volume 49. In figure 1 the tire 48 rolls over a ground surface 50.

The compression unit 31 and the membrane 21 described in connection to figure 1 is the same as in figure 2. In figure 2, the tire pressurizing device 1 is in the negative position as in figure 1.

In figure 2, the wheel 2 comprises a third air valve 51 intended to be used for inflating and deflating the tire. The third air 51 valve is mounted on the rim 3. The third air valve 51 comprises an opening 52 and a third air valve conduit 53 opening out into the tire volume 49. The third air valve conduit 53 comprises a non-return valve 54 for closing the third air valve conduit 53 from letting out compressed air from the tire volume 49.

In figure 2, the pressurizing device 1 is mounted to the wheel 2 via the third air valve 51. In figure 2, the pressurizing device 1 is screwed onto the third air valve 51 via an adapter 55 comprising an adapter conduit 56. The adapter 55 is mounted onto the housing 15 or may be a part of the housing 15. The adapter 55 comprises a pin 57 arranged for penetrating the opening 52 in the third air valve 51 and to push the non-return valve 54 into an open position, when the pressurizing device 1 is screwed onto the third air valve 51. When the non-return valve 54 is in the open position the compressed air in the tire volume 49 can flow into the third air valve conduit 53 and the adapter conduit 56.

Figure 2 shows that the tire pressurizing device 1 comprises a housing 15 encompassing an inner space divided by a membrane 21 connected to the housing 15 into an inner chamber 58 and the outer chamber 20. The housing 15 comprises a bottom portion 59, a top portion 60 and a therebetween extending side portion 61.

The pressurizing device 1 comprises a connection conduit 62 arranged in the bottom portion 59 to enable the inner chamber 58 to be in direct fluid communication with the compressed air in the tire volume 49 via the third air valve conduit 53 and the adapter conduit 56, when the pressurizing device 1 is connected to the wheel 2. In figure 2, the third air valve conduit 53 and the adapter conduit 56 and the connection conduit 62 together form a pressure conduit and the inner chamber 58 forms a pressure chamber 25.

The membrane 21 is arranged to be balanced against the tire pressure in the inner chamber 58, i.e. in the pressure chamber 25, by the first resilient means 24.

In figure 2, the pressurizing device 1 comprises the second air valve 46 intended to be used for inflating and deflating the tire 48. The second air valve 46 is connected to the inner chamber 58 via the second air valve conduit 47.

Fig. 3 schematically teaches a cross-section of a tire pressurizing device 1 according to fig. 2, but where the tire pressurizing device 1 is in a positive position. The tire 48 has been deformed due to an irregularity 63 in the surface on which the tire 48 is rolled. The deformation of the tire 48 has caused diminished tire volume 49 and thereby a sudden increase of the tire pressure. The increased tire pressure has pressed the membrane 21 from the negative position in figure 1 and 2, in the sliding direction, to a positive position. The piston 32 has thus moved correspondingly in the sliding direction into the compression chamber 26 so that the air intake conduit 33 is blocked by the envelope surface 36. The movement of the piston 32 compresses the air in the compression chamber 26 until the pressure reaches a predetermined value. When the predetermined value is reached, the first valve 42 presses on the second resilient means 43 with such force that the second resilient means 43 fails by being compressed. The first valve 42 then moves in the first conduit 37, in a direction from the second opening 39 to the first opening 38, thereby opening the second opening 39 such that the compressed air in the compression chamber 26 may flow in the first and second conduits 37, 40, through the opening 44 in the membrane 21 and into the inner chamber 58 and thus into the pressure chamber 25 and the tire volume 49, thereby adding air volume to the tire volume 49 and thus increasing the tire pressure.

After the tire 48 has passed the elevated irregularity 63, the tire pressure goes back to the prior tire pressure plus the increased pressure due to the compressed air fed to the tire volume. If the new tire pressure is below the predetermined tire pressure the membrane 21 is displaced into the negative position. The piston 32 is then accordingly slid into the negative position shown in figure 1 or 2, such that the air intake conduit 33 is uncovered enabling air to flow into the compression chamber 26. This procedure is repeated until enough compressed air has been fed into the tire volume 49 for the tire pressure to reach its predetermined value. When the tire volume has reached the predetermined tire pressure, the membrane 21 is pushed into the reference position 45 where the piston envelope surface 36 closes the air intake conduit 33. When enough air has leaked from the tire 48, the membrane 21 reaches the negative position and compressed air is fed to the tire volume 49 via the stochastic movement of the membrane 21 due to the instantaneous pressure pulses due to the irregularities 63 in the surface.

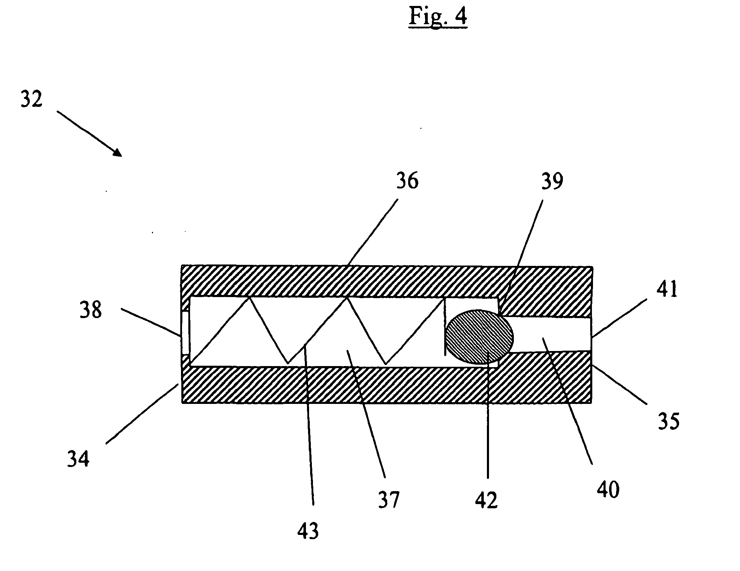

Fig. 4 schematically teaches a magnified cross-section of a compression unit 31 according to figures 1-3.

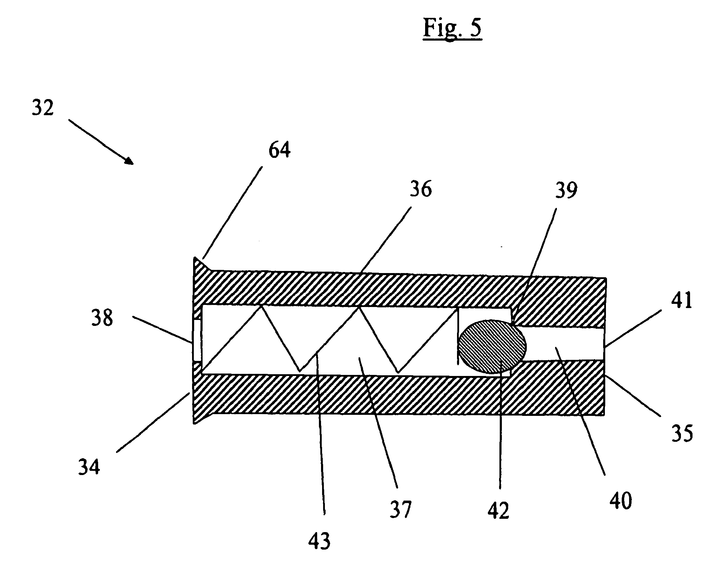

Fig. 5 schematically teaches a magnified cross-section of a compression unit 31 according to another embodiment of the invention. The piston 32 is formed with a cone shaped flange 64 in the envelope surface 36 extending in the radial direction. The flange 64 makes the first end surface 34 larger than the second end surface 35. The flange transitions from the first end surface 34 into the cylindrical envelope surface 36 at a predetermined distance from the first end surface 34. The flange 64 is intended to jam the opening between the compression chamber 26 and the outer chamber 20 in an air tight manner should the membrane 21 fail or brake.

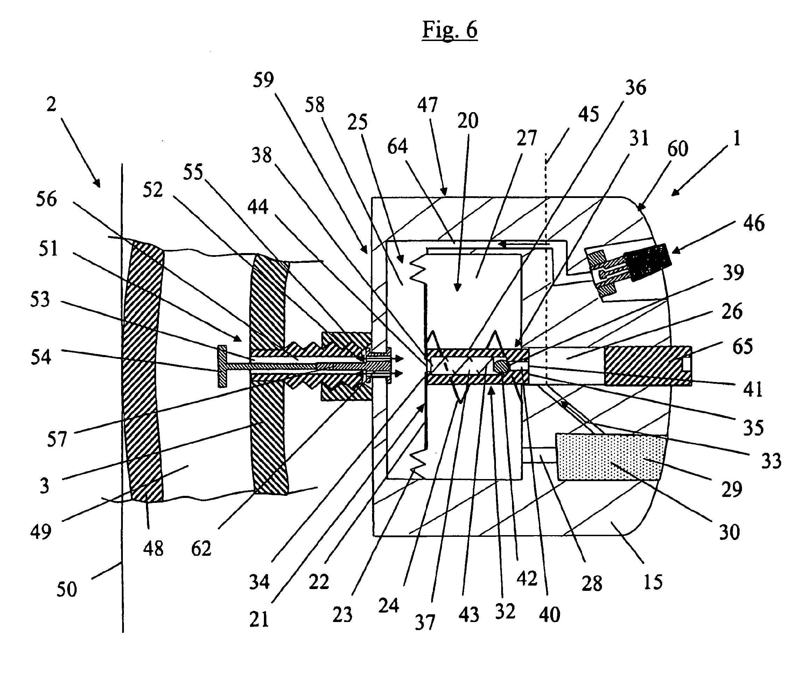

Fig. 6 schematically teaches a cross-section of a tire pressurizing device 1 according to a third embodiment of the invention mounted on a wheel 2, where the tire pressurizing device 1 is in a negative position. Figure 6 differs from figure 2 only in that an adjusting means 65 in the form of a bolt, or the like, is arranged in the housing 15 and being part of the compression chamber enclosure. The adjusting means 65 may be moved in the sliding direction for diminishing the volume of the compression such that different air pressures may be reached in the compression chamber 26 for a given piston 32 movement and a given resilient strength of the second resilient means 43. The smaller the volume of the compression chamber 26 the larger the pressure of the compressed air.

## Claims

1. Pneumatic tire pressurizing device (1) for automatically pressurizing a load-bearing tire during rotation thereof over a surface, said tire comprising a tire volume comprising compressed air having a predetermined tire pressure, said pressurizing device (1) comprises a housing (15) encompassing an inner space (20, 58), said housing (15) comprising a movable device (21) connected to the housing (15) and delimiting the inner space (20, 58), said housing (15) comprising a compression unit (31) being arranged to compress air in a compression chamber (26) when the movable device (21), starting from a negative position relative to a reference position, is affected by a sudden increase of the tire pressure due to deformation of the tire when passing an irregularity in the surface, wherein said compression unit (31) is arranged to feed the compressed air in the compression chamber (26) to the tire volume via a pressure chamber (25), and the pressure chamber (25, 28) is arranged to be in fluid communication with a pressure chamber conduit (13, 53, 56, 62) arranged to allow the air in the tire volume to flow into the pressure chamber (25, 28) and into contact with the movable device (21) such that the movable device (21) is subject to the tire pressure; **characterized in that** said compression unit (31) comprises said compression chamber (26) and a piston (32) being attached to the movable device (21) and extending from the movable device (21) into the compression chamber (26), said pressurizing device (1) being connectable to a wheel (2) comprising the tire and when connected to the wheel (2), said movable device (21) being arranged, compared to a reference position (45), to have a negative position when the tire pressure is lower than the predetermined tire pressure; the compression unit (31; 26, 32) being arranged such that when the movable device (21) is in the negative position the compression chamber (26) is in a direct fluid communication with ambient air via an air intake conduit (33) and such that when the movable device (21) is in a positive position the compression chamber (26) is hindered from fluid communication with the ambient air by the piston (32) being arranged to be displaced in a sliding direction from the negative position to the positive position, when the tire pressure increases from the value below the predetermined tire pressure to a value equal to or above the predetermined tire pressure, such that the air intake conduit (33) is closed by the envelope surface (36) of the piston (32) and such that that the air in the compression chamber (26) being compressed by the piston (32) movement.

2. Pneumatic tire pressurizing device (1) according to claim 1, **characterized in that** the pressure chamber (25) comprises a cavity (8) arranged in a wheel disc (2a) and a part of an opening (7) arranged in the wheel disc being delimited by the pressurizing device (1) when the pressurizing device (1) is mounted in the opening.

3. Pneumatic tire pressurizing device (1) according to claim 1 or 2, **characterized in** the pressure chamber conduit (13) comprises a channel 13 arranged in the wheel disc (2a).

4. Pneumatic tire pressurizing device (1) according to claim 3, **characterized in that** in the channel (13) is arranged in a spoke (6) comprised in the wheel disc.

5. Pneumatic tire pressurizing device (1) according to claim 1, **characterized in that** the wheel (2) comprises a third air valve (51) comprising a third air valve conduit (53) opening out into the tire volume (49), arranged for inflating and deflating the tire, wherein the pressurizing device (1) is connectable to the wheel (2) via the third air valve (51).

6. Pneumatic tire pressurizing device (1) according to claim 5, **characterized in that** the movable device (21) is arranged to delimit the inner space (20, 58) into an inner chamber (58) and an outer chamber (20).

7. Pneumatic tire pressurizing device (1) according to claim 5 or 6, **characterized in that** the inner chamber (58) forms the pressure chamber (25).

8. Pneumatic tire pressurizing device (1) according to claim 7, **characterized in that** the pressurizing device (1) comprises a connection conduit (62) arranged for fluid communication between the third air valve conduit (53) and the pressure chamber (25).

9. Pneumatic tire pressurizing device (1) according to claim 8, **characterized in that** the pressure chamber conduit (53, 62) comprises the third air valve conduit (53) and the connection conduit (62).

10. Pneumatic tire pressurizing device (1) according any one of the preceding claims, **characterized in that** the inner space comprises an outer chamber (20) comprising the compression chamber (26) and a balancing chamber (27).

11. Pneumatic tire pressurizing device (1) according to claim 10, **characterized in that** the balancing chamber (27) is in fluid communication with ambient air via a balancing chamber conduit (28), enabling a neutral air pressure in the balancing chamber (27).

12. Pneumatic tire pressurizing device (1) according to any one of the preceding claims, **characterized in that** the movable device (21) is arranged to be balanced against the tire pressure in the pressure chamber (25) by a first resilient means (24) such that the movable device (21) compared to the reference position (45) has the negative position when the tire pressure is lower than the predetermined tire pressure and a positive position when the tire pressure is above the predetermined tire pressure.

13. Pneumatic tire pressurizing device (1) according to any one of the preceding claims, **characterized in that** the piston (32) has two opposing first and second end surfaces (34, 35) and a therebetween extending envelope surface (36), wherein the piston (32) comprises a first conduit (37) extending from a first opening (38) in the first end surface (34) to a second opening (39), and a second conduit (40) extending from the second opening (39) to a third opening (41) in the second end surface (35).

14. Pneumatic tire pressurizing device (1) according to claim 13, **characterized in that** the movable device (21) has an opening (44) essentially aligned with the first opening (38).

15. Pneumatic tire pressurizing device (1) according to claim 13 or 14, **characterized in that** the second opening (39) is narrower than the first conduit (37) and that the piston (32) comprises a first valve (42) placed in the first conduit (37) against the second opening (39) in a first position.

16. Pneumatic tire pressurizing device (1) according to claim 15, **characterized in that** the first valve (42) is balanced by a second resilient means (43) in the form of a spring extending in the direction of the first conduit (37).

17. Pneumatic tire pressurizing device (1) according to claim 16, **characterized in that** the second resilient means (43) is arranged to release the first valve (42) when the compressed air exercises a predetermined air pressure on the first valve (42).

18. Pneumatic tire pressurizing device (1) according to claim 17, **characterized in that** the compression unit (31) is arranged to feed the compressed air in the compression chamber (26) to the tire volume via the pressure chamber (25) when the first valve (42) is released.

19. Pneumatic tire pressurizing device (1) according to any one of the preceding claims, **characterized in that** the pressurizing device (1) comprises a second air valve (46) intended to be used for inflating and deflating the tire, wherein the second air valve (46) is arranged in fluid communication with the pressure chamber (25) via a second air valve conduit (47).

20. Pneumatic tire pressurizing device (1) according to any one of the preceding claims, **characterized in that** the movable device (21) is a membrane (21).

## Patentansprüche

1. Pneumatische Reifendruckbeaufschlagungseinrichtung (1) zur automatischen Druckbeaufschlagung eines lasttragenden Reifens während dessen Rotation über eine Oberfläche, welcher Reifen ein Reifenvolumen aufweist, welches verdichtete Luft mit einem vorgegebenen Reifendruck umfasst, wobei die Druckbeaufschlagungseinrichtung (1) ein Gehäuse (15) aufweist, welches einen Innenraum (20, 58) umgibt, wobei das Gehäuse (15) eine bewegliche, mit dem Gehäuse (15) verbundene und den Innenraum (20, 58) abgrenzende Vorrichtung (21) aufweist, wobei das Gehäuse (15) eine Kompressionseinheit (31) aufweist, welche dazu ausgebildet ist, Luft in einer Kompressionskammer (26) zu verdichten, wenn die bewegliche Vorrichtung (21), von einer negativen Position relativ zu einer Referenzposition ausgehend, wegen einer Verformung des Reifens beim Passieren einer Ungleichmäßigkeit in der Oberfläche durch eine plötzliche Erhöhung des Reifendrucks beeinflusst wird, wobei die Kompressionseinheit (31) dazu ausgebildet ist, über eine Druckkammer (25) die verdichtete Luft in der Kompressionskammer (26) zum Reifenvolumen zuzuführen, und die Druckkammer (25; 28) dazu ausgebildet ist, mit einer Druckkammerleitung (13; 53, 56, 62) in Fluidkommunikation zu stehen, welche dazu ausgebildet ist, die Luft in dem Reifenvolumen in die Druckkammer (25; 28) strömen zu lassen und mit der beweglichen Vorrichtung (21) in Kontakt gelangen zu lassen, so dass die bewegliche Vorrichtung (21) dem Reifendruck ausgesetzt wird; **dadurch gekennzeichnet, dass** die Kompressionseinheit (31) die Kompressionskammer (26) und einen an der beweglichen Vorrichtung (21) befestigten, sich von der beweglichen Vorrichtung (21) in die Kompressionskammer (26) erstreckenden Kolben (32) aufweist, wobei die Druckbeaufschlagungseinrichtung (1) mit einem den Reifen umfassenden Rad (2) verbindbar ist, und, wenn sie mit dem Rad (2) verbunden wird, die bewegliche Vorrichtung (21) dazu ausgebildet ist, im Vergleich zu einer Referenzposition (45), eine negative Position aufzuweisen, wenn der Reifendruck den vorgegebenen Reifendruck unterschreitet; wobei die Kompressionseinheit (31; 26, 32) derart ausgebildet ist, dass, wenn sich die bewegliche Vorrichtung (21) in der negativen Position befindet, die Kompressionskammer (26) sich über eine Lufteinlassleitung (33) in einer direkten Fluidkommunikation mit Umgebungsluft befindet, und derart, dass, wenn sich die bewegliche Vorrichtung (21) in einer positiven Position befindet, die Kompressionskammer (26) an der Fluidkommunikation mit der Umgebungsluft durch den Kolben (32) behindert wird, welcher dazu ausgebildet ist, in einer Gleitrichtung von der negativen Position in die positive Position verschoben zu werden, wenn sich der Reifendruck von dem Wert unter dem vorgegebenen Reifendruck auf einen Wert gleich oder über dem vorgegebenen Reifendruck erhöht, derart, dass die Lufteinlassleitung (33) durch die Hüllenoberfläche (36) des Kolbens (32) geschlossen wird und derart, dass die Luft in der Kompressionskammer (26) durch die Kolbenbewegung (32) verdichtet wird.

2. Pneumatische Reifendruckbeaufschlagungseinrichtung (1) nach Anspruch 1, **dadurch gekennzeichnet, dass** die Druckkammer (25) eine in einer Radscheibe (2a) angeordnete Aussparung (8) und einen in der Radscheibe angeordneten Teil einer Öffnung (7) aufweist, welche durch die Druckbeaufschlagungseinrichtung (1) bei deren Montage in der Öffnung abgegrenzt ist.

3. Pneumatische Reifendruckbeaufschlagungseinrichtung (1) nach Anspruch 1 oder 2, **dadurch gekennzeichnet, dass** die Druckkammerleitung (13) einen in der Radscheibe (2a) angeordneten Kanal (13) aufweist.

4. Pneumatische Reifendruckbeaufschlagungseinrichtung (1) nach Anspruch 3, **dadurch gekennzeichnet, dass** der Kanal (13) in einer von der Radscheibe umfassten Speiche (6) angeordnet ist.

5. Pneumatische Reifendruckbeaufschlagungseinrichtung (1) nach Anspruch 1, **dadurch gekennzeichnet, dass** das Rad (2) ein drittes Luftventil (51) aufweist, welches eine dritte Luftventilleitung (53) aufweist, welche in das Reifenvolumen (49) mündet und dazu ausgebildet ist, den Reifen auf- und abzublasen, wobei die Druckbeaufsclagungsvorrichtung (1) über das dritte Luftventil (51) mit dem Rad (2) verbindbar ist.

6. Pneumatische Reifendruckbeaufschlagungseinrichtung (1) nach Anspruch 5, **dadurch gekennzeichnet, dass** die bewegliche Vorrichtung (21) dazu ausgebildet ist, den Innenraum (20, 58) gegen eine innere Kammer (58) und eine äußere Kammer (20) abzugrenzen.

7. Pneumatische Reifendruckbeaufschlagungseinrichtung (1) nach Anspruch 5 oder 6, **dadurch gekennzeichnet, dass** die innere Kammer (58) die Druckkammer (25) bildet.

8. Pneumatische Reifendruckbeaufschlagungseinrichtung (1) nach Anspruch 7, **dadurch gekennzeichnet, dass** die Druckbeaufschlagungseinrichtung (1) eine zur Fluidkommunikation zwischen der dritten Luftventilleitung (53) und der Druckkammer (25) ausgebildete Verbindungsleitung (62) aufweist.

9. Pneumatische Reifendruckbeaufschlagungseinrichtung (1) nach Anspruch 8, **dadurch gekennzeichnet, dass** die Druckkammerleitung (53, 62) die dritte Luftventilleitung (53) und die Verbindungsleitung (62) aufweist.

10. Pneumatische Reifendruckbeaufschlagungseinrichtung (1) nach einem der vorgehenden Ansprüche, **dadurch gekennzeichnet, dass** der Innenraum eine die Kompressionskammer (26) aufweisende äußere Kammer (20) und eine Ausgleichkammer (27) aufweist.

11. Pneumatische Reifendruckbeaufschlagungseinrichtung (1) nach Anspruch 10, **dadurch gekennzeichnet, dass** sich die Ausgleichkammer (27) über eine Ausgleichkammerleitung (28) mit Umgebungsluft in Fluidkommunikation steht, wodurch ein neutraler Luftdruck in der Ausgleichkammer (27) ermöglicht wird.

12. Pneumatische Reifendruckbeaufschlagungseinrichtung (1) nach einem der vorgehenden Ansprüche, **dadurch gekennzeichnet, dass** die bewegliche Vorrichtung (21) dazu ausgebildet ist, durch ein erstes elastisches Mittel (24) gegen den Reifendruck in der Druckkammer (25) derart ausgeglichen zu werden, dass die bewegliche Vorrichtung (21) im Vergleich zur Referenzposition (45) die negative Position aufweist, wenn der Reifendruck den vorgegebenen Reifendruck unterschreitet, und eine positive Position aufweist, wenn der Reifendruck den vorgegebenen Reifendruck überschreitet.

13. Pneumatische Reifendruckbeaufschlagungseinrichtung (1) nach einem der vorgehenden Ansprüche, **dadurch gekennzeichnet, dass** der Kolben (32) zwei entgegengesetzte erste und zweite Endflächen (34, 35) und eine sich dazwischen erstreckende Hüllenoberfläche (36) aufweist, wobei der Kolben (32) eine erste Leitung (37) aufweist, welche sich von einer ersten Öffnung (38) in der ersten Endfläche (34) zu einer zweiten Öffnung (39) erstreckt, und eine zweite Leitung (40) aufweist, welche sich von der zweiten Öffnung (39) zu einer dritten Öffnung (41) in der zweiten Endfläche (35) erstreckt.

14. Pneumatische Reifendruckbeaufschlagungseinrichtung (1) nach Anspruch 13, **dadurch gekennzeichnet, dass** die bewegliche Vorrichtung (21) eine mit der ersten Öffnung (38) im Wesentlichen fluchtende Öffnung (44) aufweist.

15. Pneumatische Reifendruckbeaufsclagungseinrichtung (1) nach Anspruch 13 oder 14, **dadurch gekennzeichnet, dass** die zweite Öffnung (39) enger als die erste Leitung (37) ist, und dass der Kolben (32) ein erstes Ventil (42) aufweist, welches in der ersten Leitung (37) gegen die zweite Öffnung (39) in einer ersten Position angeordnet ist.

16. Pneumatische Reifendruckbeaufschlagungseinrichtung (1) nach Anspruch 15, **dadurch gekennzeichnet, dass** das erste Ventil (42) durch ein zweites elastisches Mittel (43) in Form einer sich in Richtung der ersten Leitung (37) erstreckenden Feder ausgeglichen ist.

17. Pneumatische Reifendruckbeaufschlagungseinrichtung (1) nach Anspruch 16, **dadurch gekennzeichnet, dass** das zweite elastische Mittel (43) zur Freigabe des ersten Ventils (42) ausgebildet ist, wenn die verdichtete Luft einen vorgegebenen Luftdruck auf das erste Ventil (42) ausübt.

18. Pneumatische Reifendruckbeaufschlagungseinrichtung (1) nach Anspruch 17, **dadurch gekennzeichnet, dass** die Verdichtungseinheit (31) dazu ausgebildet ist, über die Druckkammer (25) die verdichtete Luft in der Kompressionskammer (26) zum Reifenvolumen zuzuführen, wenn das erste Ventil (42) freigegeben wird.

19. Pneumatische Reifendruckbeaufschlagungseinrichtung (1) nach einem der vorgehenden Ansprüche, **dadurch gekennzeichnet, dass** die Druckbeaufschlagungseinrichtung (1) ein zweites Luftventil (46) aufweist, welches zum Auf- und Abblasen des Reifens vorgesehen ist, wobei das zweite Luftventil (46) über eine zweite Luftventilleitung (47) in Fluidkommunikation mit der Druckkammer (25) angeordnet ist.

20. Pneumatische Reifendruckbeaufschlagungseinrichtung (1) nach einem der vorgehenden Ansprüche, **dadurch gekennzeichnet, dass** die bewegliche Vorrichtung (21) eine Membran (21) ist.

## Revendications

1. Dispositif de pressurisation pour un pneu pneumatique (1) pour la pressurisation automatique d'un pneu porteur pendant la rotation de celui-ci sur une surface, ledit pneu comportant un volume pneumatique comprenant de l'air comprimé présentant une pression pneumatique prédéterminée, ledit dispositif de pressurisation (1) comprenant un boîtier (15) englobant un espace intérieur (20, 58), ledit boîtier (15) comprenant un dispositif mobile (21) relié au boîtier (15) et délimitant l'espace intérieur (20, 58), ledit boîtier (15) comprenant une unité de compression (31) étant agencée pour comprimer de l'air dans une chambre de compression (26) lorsque le dispositif mobile (21) partant d'une position négative par rapport à la position de référence est affecté par une augmentation soudaine de la pression pneumatique due à la déformation du pneu lors du passage d'une irrégularité dans la surface, ladite unité de compression (31) étant agencée pour amener l'air comprimé dans la chambre de compression (26) pour le volume pneumatique via une chambre de pression (25), et la chambre de pression (25; 28) étant agencée pour être en communication de fluide avec un conduit de chambre de pression (13; 53, 56, 62) agencé pour permettre à l'air dans le volume pneumatique de s'écouler dans la chambre de pression (25; 28) et en contact avec le dispositif mobile (21) si bien que le dispositif mobile (21) est soumis à la pression pneumatique, **caractérisé en ce que** l'unité de compression (31) comprend ladite chambre de compression (26) et un piston (32) étant fixés au dispositif mobile (21) et s'étendant depuis le dispositif mobile (21) dans la chambre de compression (26), ledit dispositif de pressurisation (1) pouvant être relié à une roue (2) comprenant le pneu, et lorsqu'il est relié à la roue (2); ledit dispositif mobile (21) étant agencé, par rapport à une position de référence (45), pour avoir une position négative lorsque la pression pneumatique est inférieure à la pression pneumatique prédéterminée; l'unité de compression (31; 26, 32) étant agencée si bien que lorsque le dispositif mobile (21) est dans la position négative, la chambre de compression (26) est dans une communication de fluide directe avec l'air ambiant par l'intermédiaire d'un conduit d'admission d'air (33) et si bien que lorsque le dispositif mobile (21) est dans une position positive, la chambre de compression (26) est empêchée de communication de fluide avec l'air ambiant par le piston (32) étant agencé pour être déplacé dans une direction de coulissement de la position négative à la position positive, lorsque la pression pneumatique augmente à partir de la valeur inférieure à la pression pneumatique prédéterminée à une valeur égale ou supérieure à la pression pneumatique prédéterminée, si bien que que le conduit d'admission d'air (33) est fermé par la surface d'enveloppe (36) du piston (32) et si bien que l'air dans la chambre de compression (26) est comprimé par le mouvement du piston (32).

2. Dispositif de pressurisation pour un pneu pneumatique (1) selon la revendication 1, **caractérisé en ce que** la chambre de pression (25) comprend une cavité (8) disposée dans un disque de roue (2a) et une partie d'une ouverture (7) disposée dans le disque de roue et étant délimitée par le dispositif de pressurisation (1) lorsque le dispositif de pressurisation (1) est monté dans l'ouverture.

3. Dispositif de pressurisation pour un pneu pneumatique (1) selon la revendication 1 ou 2, **caractérisé en ce que** le conduit de chambre de pression (13) comprend un canal 13 disposé dans le disque de roue (2a).

4. Dispositif de pressurisation pour un pneu pneumatique (1) selon la revendication 3, **caractérisé en ce que** le canal (13) est disposé dans un rayon (6) compris par le disque de roue.

5. Dispositif de pressurisation pour un pneu pneumatique (1) selon la revendication 1, **caractérisé en ce que** la roue (2) comprend une troisième soupape à air (51) comprenant un troisième conduit de soupape de d'air (53) débouchant dans le volume pneumatique (49), agencé pour gonfler et dégonfler le pneu, le dispositif de pressurisation (1) pouvant être relié à la roue (2) par l'intermédiaire de la troisième soupape d'air (51).

6. Dispositif de pressurisation pour un pneu pneumatique (1) selon la revendication 5, **caractérisé en ce que** le dispositif mobile (21) est agencé pour délimiter l'espace intérieur (20, 58) dans une chambre intérieure (58) et une chambre extérieure (20).

7. Dispositif de pressurisation pour un pneu pneumatique (1) selon la revendication 5 ou 6, **caractérisé en ce que** la chambre intérieure (58) forme la chambre de pression (25).

8. Dispositif de pressurisation pour un pneu pneumatique (1) selon la revendication 7, **caractérisé en ce que** le dispositif de pressurisation (1) comprend un conduit de raccordement (62) agencé pour une communication de fluide entre le troisième conduit de soupape d'air (53) et la chambre de pression (25).

9. Dispositif de pressurisation pour un pneu pneumatique (1) selon la revendication 8, **caractérisé en ce que** le conduit de chambre de pression (53, 62) comprend le troisième conduit de vanne d'air (53) et le conduit de raccordement (62).

10. Dispositif de pressurisation pour un pneu pneumatique (1) selon l'une quelconque des revendications précédentes, **caractérisé en ce que** l'espace intérieur comprend une chambre extérieure (20) comprenant la chambre de compression (26) et une chambre d'équilibrage (27).

11. Dispositif de pressurisation pour un pneu pneumatique (1) selon la revendication 10, **caractérisé en ce que** la chambre d'équilibrage (27) est en communication de fluide avec l'air ambiant par l'intermédiaire d'un conduit de chambre d'équilibrage (28), permettant une pression de l'air neutre dans la chambre d'équilibrage (27).

12. Dispositif de pressurisation pour un pneu pneumatique (1) selon l'une quelconque des revendications précédentes, **caractérisé en ce que** le dispositif mobile (21) est agencé pour être mis en balance avec la pression pneumatique dans la chambre de pression (25) par un premier moyen élastique (24) si bien que le dispositif mobile (21) par rapport à la position de référence (45) présente la position négative lorsque la pression pneumatique est inférieure à la pression pneumatique prédéterminée et une position prédéterminée positive lorsque la pression pneumatique est supérieure à la pression pneumatique prédéterminée.

13. Dispositif de pressurisation pour un pneu pneumatique (1) selon l'une quelconque des revendications précédentes, **caractérisé en ce que** le piston (32) comporte deux première et deuxième surfaces d'extrémité opposées (34, 35) et une surface d'enveloppe s'étendant entre celles-ci (36), le piston (32) comprenant un premier conduit (37) s'étendant depuis une première ouverture (38) dans la première surface d'extrémité (34) à une deuxième ouverture (39), et un deuxième conduit (40) s'étendant depuis la deuxième ouverture (39) à une troisième ouverture ( 41) dans la deuxième surface d'extrémité (35).

14. Dispositif de pressurisation pour un pneu pneumatique (1) selon la revendication 13, **caractérisé en ce que** le dispositif mobile (21) présente une ouverture (44) essentiellement alignée avec la première ouverture (38).

15. Dispositif de pressurisation pour un pneu pneumatique (1) selon la revendication 13 ou 14, **caractérisé en ce que** la deuxième ouverture (39) est plus étroite que le premier conduite (37) et **en ce que** le piston (32) comprend une première soupape (42) placée dans le premier conduit (37) contre la deuxième ouverture (39) dans une première position.

16. Dispositif de pressurisation pour un pneu pneumatique (1) selon la revendication 15, **caractérisé en ce que** la première soupape (42) est équilibrée par un deuxième moyen élastique (43) sous la forme d'un ressort s'étendant dans la direction du premier conduit (37).

17. Dispositif de pressurisation pour un pneu pneumatique (1) selon la revendication 16, **caractérisé en ce que** le deuxième moyen élastique (43) est agencé pour libérer la première soupape (42) lorsque l'air comprimé exerce une pression d'air prédéterminée sur la première soupape (42).

18. Dispositif de pressurisation pour un pneu pneumatique (1) selon la revendication 17, **caractérisé en ce que** l'unité de compression (31) est agencée pour amener l'air comprimé dans la chambre de compression (26) pour le volume pneumatique par l'intermédiaire de la chambre de pression (25) lorsque la première soupape (42) est libérée.

19. Dispositif de pressurisation pour un pneu pneumatique (1) selon l'une quelconque des revendications précédentes, **caractérisé en ce que** le dispositif de pressurisation (1) comprend une deuxième soupape d'air (46) destinée à être utilisée pour gonfler et dégonfler le pneu, la deuxième soupape d'air (46) étant agencée en communication de fluide avec la chambre de pression (25) par l'intermédiaire d'un deuxième conduit de soupape d'air (47).

20. Dispositif de pressurisation pour un pneu pneumatique (1) selon l'une quelconque des revendications précédentes, **caractérisé en ce que** le dispositif mobile (21) est une membrane (21).
